# EUROPEAN PATENT APPLICATION

(11) **EP 4 636 719 A1**
(43) Date of publication of application: **22.10.2025**
(21) Application number: 24744074.6
(22) Date of filing: 03.01.2024
(51) Int. Cl.: G07C 9/00

(54) **CONTROL METHOD, CONTROLLER, DEVICE, AND CONTROL SYSTEM**

(30) Priority: 19.01.2023 CN 202310141084
(71) Applicant: Huawei Technologies Co., Ltd., Shenzhen, Guangdong 518129 (CN)
(72) Inventor: YU, Zhouyi, Shenzhen, Guangdong 518129 (CN); ZHANG, Zuoqiang, Shenzhen, Guangdong 518129 (CN)
(74) Representative: Goddar, Heinz J.
(86) International application number: PCT/CN2024/070293
(87) International publication number: WO 2024/152898

(57) **Abstract**

A control method, a controller (1300), a device (100, 1400), and a control system are provided. The method may be applied to a first controller, and the method may include: in response to an unlocking request from a second controller, performing authentication on the second controller, where the unlocking request is used to request to unlock a door lock of a vehicle (S1001); performing authentication on the device (100, 1400) after the second controller is successfully authenticated, where the device (100, 1400) is configured to serve as a digital key associated with the vehicle, and a distance between the device (100, 1400) and the vehicle is less than or equal to a specified distance threshold (S1002); and when the device (100, 1400) is successfully authenticated, determining to unlock the door lock of the vehicle (S1003). The first controller determines to unlock the door lock of the vehicle only after the first controller performs authentication on the device (100, 1400) used as the digital key. This can avoid a man-in-the-middle attack, and ensure that the door lock of the vehicle is unlocked via the device (100, 1400), namely, the digital key. Therefore, security of unlocking with the digital key can be improved.

## Description

### CROSS-REFERENCE TO RELATED APPLICATIONS

This application claims priority to Chinese Patent Application No. 202310141084.X, filed with the China National Intellectual Property Administration on January 19, 2023 and entitled "CONTROL METHOD, CONTROLLER, DEVICE, AND CONTROL SYSTEM", which is incorporated herein by reference in its entirety.

### TECHNICAL FIELD

This application relates to the field of control technologies, and in particular, to a control method, a controller, a device, and a control system.

### BACKGROUND

A digital key solution is generally a solution in which a key application (application, APP) is installed on a device (for example, a mobile phone, a smartwatch, or a smart band) to change the device into a vehicle key. The device on which the key application is installed may be used as a digital key, and may communicate with a vehicle by using short-range communication technologies such as Bluetooth, near field communication (near field communication, NFC), and ultra-wideband (ultra-wideband, UWB), to implement keyless entry and vehicle startup, and to implement functions such as personalized vehicle setting. Currently, a device has powerful functions and is highly popular. A user can use a digital key to fully meet a daily vehicle use requirement, without the need to carry a conventional key. In addition, the digital key supports functions that cannot be implemented via the conventional key, such as touchless unlocking and key distribution, thereby promoting increasingly wide application of the digital key.

Currently, in a process of unlocking the vehicle via the digital key, after the digital key establishes a Bluetooth connection to a Bluetooth controller in the vehicle, the digital key needs to perform intelligent car connectivity industry ecosystem alliance (intelligent car connectivity ecosystem alliance, ICCE) authentication or car connectivity consortium (car connectivity consortium, CCC) authentication with the Bluetooth controller. After the authentication succeeds, the Bluetooth controller further needs to perform security authentication with an unlocking controller in the vehicle. The unlocking controller controls the vehicle to open a lock only after the security authentication succeeds.

The Bluetooth controller is a cheap electronic control unit (electronic control unit, ECU), and the Bluetooth controller is usually implemented via a microcontroller unit (microcontroller unit, MCU) chip. Therefore, security capability is insufficient. In addition, the Bluetooth controller has complex codes (for example, including a Bluetooth control protocol and an ICCE/a CCC protocol), and provides an interface for external communication. Therefore, the Bluetooth controller is a high-risk component, and is a weak point that an attacker can focus on. In conclusion, the Bluetooth controller is prone to a man-in-the-middle attack due to features such as poor security performance and high risk of the Bluetooth controller, and consequently security of a process of unlocking with the digital key is reduced.

### SUMMARY

This application provides a control method, a controller, a device, and a control system, to improve security of unlocking with a digital key.

A first aspect provides a control method, applied to a first controller. The method includes: in response to an unlocking request from a second controller, performing authentication on the second controller, where the unlocking request is used to request to unlock a door lock of a vehicle; performing authentication on a device after the second controller is successfully authenticated, where the device is configured to serve as a digital key associated with the vehicle, and a distance between the device and the vehicle is less than or equal to a specified distance threshold; and when the device is successfully authenticated, determining to unlock the door lock of the vehicle.

In the method, although the request for unlocking the door lock of the vehicle is sent by the second controller to the first controller, after the first controller successfully authenticates the second controller, the first controller does not directly determine to unlock the door lock of the vehicle. However, the first controller performs authentication on the device used as the digital key associated with the vehicle, and the first controller determines to open the door lock of the vehicle only after the first controller successfully authenticates the device. This can avoid a man-in-the-middle attack, and ensure that the door lock of the vehicle is unlocked via the device, namely, the digital key. Therefore, security of unlocking with the digital key can be improved. Based on the method, even if the second controller is attacked, the first controller can determine, based on an authentication result of the device, namely, the digital key, whether to unlock the door lock of the vehicle. Therefore, an attacker cannot open the door lock of the vehicle by attacking the second controller. Therefore, the method can improve security of a process of unlocking with the digital key.

In a possible design, performing authentication on the device includes: sending a first random number to the device; receiving a first authentication code from the device, where the first authentication code is generated by the device based on the first random number and a preset first key corresponding to the device; and when the first authentication code is the same as a second authentication code, determining that the device is successfully authenticated, where the second authentication code is generated by the first controller based on the first random number and a preset second key corresponding to the first controller.

In the method, the first controller may perform authentication with the device in a challenge response manner, so that the first controller can perform authentication on the device conveniently and quickly, thereby improving processing efficiency of an unlocking and controlling process while ensuring security.

In a possible design, sending the first random number to the device includes: forwarding the first random number to the device via the second controller; and receiving the first authentication code from the device includes: receiving the first authentication code that is from the device and that is forwarded by the second controller.

In the method, information exchanged between the first controller and the device may be forwarded via the second controller. Therefore, information exchange can be implemented between the first controller and the device without establishing a direct communication connection.

In a possible design, the first controller is an unlocking controller deployed in the vehicle, and the second controller is a Bluetooth controller deployed in the vehicle.

In the method, the first controller is the unlocking controller in the vehicle, and the second controller is the Bluetooth controller in the vehicle. In this scenario, based on the foregoing method, after the first controller receives an unlocking request from the Bluetooth controller, the unlocking controller may perform authentication on the Bluetooth controller, continue to perform authentication on the digital key, namely, the device, after the authentication succeeds, and determine to unlock the door lock of the vehicle only after the digital key is successfully authenticated. Therefore, even if the Bluetooth controller is attacked, the unlocking controller can still ensure accuracy and security of unlocking with the digital key. Therefore, the foregoing method can resolve a problem that security of a process of unlocking with the digital key is reduced because the Bluetooth controller is prone to a man-in-the-middle attack. In other words, the foregoing method can improve security of the process of unlocking with the digital key.

In a possible design, after determining to unlock the door lock of the vehicle, the method further includes: sending an unlocking indication to a third controller, where the third controller is configured to control the door lock of the vehicle, and the unlocking indication indicates to unlock the door lock of the vehicle.

In the method, when the first controller determines to unlock the door lock of the vehicle, the first controller may control the third controller to unlock the door lock of the vehicle, to implement unlocking with the digital key.

A second aspect provides a control method, applied to a device. The method includes: when receiving a first random number from a first controller, generating a first authentication code based on the first random number and a preset first key corresponding to the device, where the device is configured to serve as a digital key associated with a vehicle, and the first controller is configured to determine whether to unlock a door lock of the vehicle; and sending the first authentication code to the first controller, to cause the first controller to perform authentication on the device based on the first authentication code and determine, after the authentication succeeds, to unlock the door lock of the vehicle.

In the method, the first controller can determine a case in which the door lock is unlocked. As a digital key associated with the vehicle, the device directly performs the authentication procedure with the first controller, so that it can be ensured that the first controller can subsequently determine to unlock the door lock of the vehicle when the device is successfully authenticated, and it is ensured that the door lock of the vehicle is unlocked via the device, namely, the digital key, thereby improving security of unlocking with the digital key. In addition, the device may perform authentication with the first controller in a challenge response manner, so that the first controller can perform authentication on the device conveniently and quickly, thereby improving processing efficiency of an unlocking and controlling process while ensuring security.

In a possible design, sending the first authentication code to the first controller includes: forwarding the first authentication code to the first controller via a second controller.

In the method, information exchanged between the device and the first controller may be forwarded via the second controller. Therefore, information exchange can be implemented between the device and the first controller without establishing a direct communication connection.

In a possible design, the second controller is a Bluetooth controller deployed in the vehicle.

In the method, the device is configured to serve as the digital key, and directly performs the authentication procedure with the first controller, so that impact of the second controller on security of a process of unlocking with the digital key can be avoided. Therefore, when the second controller is the Bluetooth controller that is prone to a man-in-the-middle attack, security of the process of unlocking with the digital key can also be ensured.

In a possible design, the first controller is an unlocking controller deployed in the vehicle.

In this scenario, when the device is configured to serve as the digital key, the device may directly perform an authentication procedure with the unlocking controller, so that impact of another intermediate device, for example, the Bluetooth controller on security of a process of unlocking with the digital key can be avoided, thereby improving security of unlocking with the digital key.

A third aspect provides a control method, applied to a first controller. The method includes: determining, by performing authentication on a device, that the device is a digital key associated with a vehicle; obtaining a distance between the device and the vehicle; and when the distance is less than or equal to a specified distance threshold, determining to unlock a door lock of the vehicle.

In the method, the first controller may directly perform authentication on the device used as the digital key associated with the vehicle. Therefore, there is no problem of a man-in-the-middle attack. When the first controller successfully authenticates the device and determines that the distance between the device and the vehicle is less than or equal to the specified distance threshold, the first controller may determine that the device meets a condition for unlocking the door lock of the vehicle via the digital key. In this case, the first controller may determine to open the door lock of the vehicle. In this process, it can be ensured that the door lock of the vehicle is unlocked via the device, namely, the digital key. Therefore, security of unlocking with the digital key can be improved.

In a possible design, determining, by performing authentication on the device, that the device is the digital key associated with the vehicle includes: performing authentication on the device based on an intelligent car connectivity industry ecosystem alliance ICCE standard or a car connectivity consortium CCC standard; and when the device is successfully authenticated, determining that the device is the digital key associated with the vehicle.

In the method, the first controller performs authentication on the device based on the ICCE standard or the CC standard, so that authentication accuracy can be ensured.

In a possible design, obtaining the distance between the device and the vehicle includes: obtaining ranging reference information from a second controller, and calculating the distance between the device and the vehicle based on the ranging reference information, where the second controller is configured to collect the ranging reference information, and the ranging reference information is used to determine the distance between the device and the vehicle; or obtaining the distance between the device and the vehicle from a second controller, where the second controller is configured to measure the distance between the device and the vehicle.

In the method, the first controller may obtain the distance between the vehicle and the device in a plurality of manners, and flexibility is high.

In a possible design, in a process of performing authentication on the device, information transmitted between the first controller and the device is forwarded via the second controller.

In the method, information exchanged between the first controller and the device may be forwarded via the second controller. Therefore, information exchange can be implemented between the first controller and the device without establishing a direct communication connection.

In a possible design, the second controller is a Bluetooth controller deployed in the vehicle.

In this scenario, based on the foregoing method, after the first controller receives an unlocking request from the Bluetooth controller, the first controller may perform authentication on the Bluetooth controller, continue to perform authentication on the digital key, namely, the device, after the authentication succeeds, and determine to unlock the door lock of the vehicle only after the digital key is successfully authenticated. Therefore, even if the Bluetooth controller is attacked, the first controller can still ensure accuracy and security of unlocking with the digital key. Therefore, the foregoing method can resolve a problem that security of a process of unlocking with the digital key is reduced because the Bluetooth controller is prone to a man-in-the-middle attack. In other words, the foregoing method can improve security of the process of unlocking with the digital key.

In a possible design, the first controller is an unlocking controller deployed in the vehicle.

In this scenario, the unlocking controller may directly perform authentication on the device used as the digital key, so that impact of another intermediate device, for example, the Bluetooth controller on security of a process of unlocking with the digital key can be avoided, thereby improving security of unlocking with the digital key.

In a possible design, after determining to unlock the door lock of the vehicle, the method further includes: sending an unlocking indication to a third controller, where the third controller is configured to control the door lock of the vehicle, and the unlocking indication indicates to unlock the door lock of the vehicle.

In the method, when the first controller determines to unlock the door lock of the vehicle, the first controller may control the third controller to unlock the door lock of the vehicle, to implement unlocking with the digital key.

A fourth aspect provides a control method, applied to a device. The method includes: performing an authentication procedure with a first controller, to cause the first controller to perform authentication on the device and determine, after the authentication succeeds, to unlock a door lock of the vehicle, where the authentication procedure is used by the first controller to perform authentication on the device.

In the method, the first controller can determine a case in which the door lock is unlocked. As a digital key associated with the vehicle, the device directly performs the authentication procedure with the first controller, so that it can be ensured that the first controller can determine to unlock the door lock of the vehicle when the device is successfully authenticated, and it is ensured that the door lock of the vehicle is unlocked via the device, namely, the digital key, thereby improving security of unlocking with the digital key.

In a possible design, in a process of performing the authentication procedure with the first controller, information transmitted between the device and the first controller is forwarded via a second controller.

In the method, information exchanged between the device and the first controller may be forwarded via the second controller. Therefore, information exchange can be implemented between the device and the first controller without establishing a direct communication connection.

In a possible design, the second controller is a Bluetooth controller deployed in the vehicle.

In the method, the device is configured to serve as the digital key, and directly performs the authentication procedure with the first controller, so that impact of the second controller on security of a process of unlocking with the digital key can be avoided. Therefore, when the second controller is the Bluetooth controller that is prone to a man-in-the-middle attack, security of the process of unlocking with the digital key can also be ensured.

In a possible design, the first controller is an unlocking controller deployed in the vehicle.

In this scenario, when the device is configured to serve as the digital key for unlocking, the device may directly perform an authentication procedure with the unlocking controller, so that impact of another intermediate device, for example, the Bluetooth controller on security of a process of unlocking with the digital key can be avoided, thereby improving security of unlocking with the digital key.

According to a fifth aspect, a controller is provided. The controller includes a memory and one or more processors. The memory is configured to store program code, and the program code includes instructions. When the instructions are executed by the one or more processors, the controller is caused to perform the method according to any one of the first aspect or the possible designs of the first aspect, or perform the method according to any one of the third aspect or the possible designs of the third aspect.

According to a sixth aspect, a device is provided. The device includes a memory and one or more processors. The memory is configured to store program code, and the program code includes instructions. When the instructions are executed by the one or more processors, the device is caused to perform the method according to any one of the second aspect or the possible designs of the second aspect, or perform the method according to any one of the fourth aspect or the possible designs of the fourth aspect.

According to a seventh aspect, a control system is provided. The control system includes the controller according to the fifth aspect and the device according to the sixth aspect.

According to an eighth aspect, a readable storage medium is provided. The readable storage medium stores a program. When the program is run on a controller, the controller is caused to perform the method according to any one of the first aspect or the possible designs of the first aspect, or perform the method according to any one of the third aspect or the possible designs of the third aspect.

According to a ninth aspect, a readable storage medium is provided. The readable storage medium stores a program. When the program is run on a device, the device is caused to perform the method according to any one of the second aspect or the possible designs of the second aspect, or perform the method according to any one of the fourth aspect or the possible designs of the fourth aspect.

For beneficial effect of the fifth aspect to the ninth aspect, refer to descriptions of beneficial effect of the corresponding aspects of the first aspect to the fourth aspect. Details are not described herein.

### BRIEF DESCRIPTION OF DRAWINGS

FIG. 1 is a diagram of a method for unlocking with a digital key;
FIG. 2 is a diagram of a hardware architecture of a device according to an embodiment of this application;
FIG. 3 is a diagram of a software architecture of a device according to an embodiment of this application;
FIG. 4 is a diagram of an architecture of a control system according to an embodiment of this application;
FIG. 5 is a diagram of an architecture of another control system according to an embodiment of this application;
FIG. 6 is a diagram of an architecture of still another control system according to an embodiment of this application;
FIG. 7A and FIG. 7B are a schematic flowchart of a control method according to an embodiment of this application;
FIG. 8 is a schematic flowchart of another control method according to an embodiment of this application;
FIG. 9 is a schematic flowchart of still another control method according to an embodiment of this application;
FIG. 10 is a diagram of a control method according to an embodiment of this application;
FIG. 11 is a diagram of another control method according to an embodiment of this application;
FIG. 12 is a diagram of still another control method according to an embodiment of this application;
FIG. 13 is a diagram of a structure of a controller according to an embodiment of this application; and
FIG. 14 is a diagram of a structure of a device according to an embodiment of this application.

### DESCRIPTION OF EMBODIMENTS

To make objectives, technical solution, and advantages of embodiments of this application clearer, the following further describes embodiments of this application in detail with reference to accompanying drawings.

The terms "first" and "second" below in descriptions of embodiments of this application are merely used for a description purpose, and shall not be understood as an indication or implication of relative importance or implicit indication of a quantity of indicated technical features. Therefore, a feature limited by "first" or "second" may explicitly or implicitly include one or more features.

For ease of understanding, descriptions about concepts related to this application are provided as examples for reference.

A device may be a device having a processing function. In some embodiments of this application, the device may be a portable device, for example, a mobile phone, a tablet computer, a wearable device (for example, a watch, a band, a helmet, or a headset) with a wireless communication function, an in-vehicle terminal device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), a smart home device (for example, a smart television or a smart speaker), a smart robot, a workshop device, a wireless terminal in self driving (self driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), or a flight device (for example, a smart robot, a hot air balloon, an uncrewed aerial vehicle, or an aircraft).

The wearable device is a portable device that can be directly worn by a user or integrated into clothes or accessories of the user.

In some embodiments of this application, the device may alternatively be a portable device that further includes another function, for example, a personal digital assistant function and/or a music player function. An example embodiment of the portable device includes but is not limited to a portable device provided with iOS^{®}, Android^{®}, Microsoft^{®}, or another operating system. The portable device may alternatively be another portable device, for example, a laptop (laptop) with a touch-sensitive surface (for example, a touch panel). It should be further understood that in some other embodiments of this application, the device may alternatively be a desktop computer with a touch-sensitive surface (for example, a touch panel), instead of the portable device.

It should be understood that in embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following" or a similar expression thereof indicates any combination of these items, including a single item or any combination of a plurality of items. For example, at least one of a, b, or c may represent: a, b, c, a and b, a and c, b and c, or a, b and c, where a, b, and c may be a singular or plural number.

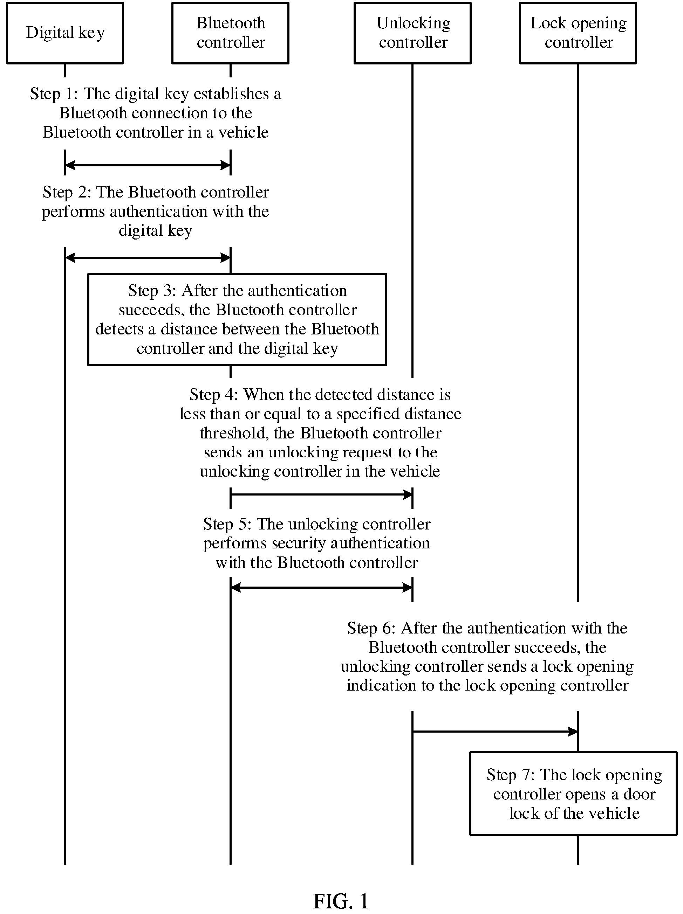

Touchless unlocking with a digital key may also be referred to as a "keyless entry function". To be specific, when a user carries a digital key and enters a specified range near a vehicle, a vehicle security system matches a digital key. If the matching is correct, a vehicle door can be unlocked. In this way, an operation step in which the user takes a key and opens the vehicle door via the key is omitted. Specifically, as shown in FIG. 1, a current procedure in which the digital key (for example, a device on which a key application is installed) unlocks the vehicle may include the following steps.

Step 1: The digital key establishes a Bluetooth connection to a Bluetooth controller in the vehicle.

Step 2: The Bluetooth controller performs authentication with the digital key.

Authentication may be performed between the Bluetooth controller and the digital key based on an intelligent car connectivity industry ecosystem alliance (intelligent car connectivity ecosystem alliance, ICCE) or a car connectivity consortium (car connectivity consortium, CCC) standard. If the digital key is a key matching the vehicle, the authentication succeeds; or if the digital key is not the key matching the vehicle, the authentication fails.

Step 3: After the authentication succeeds, the Bluetooth controller detects a distance between the Bluetooth controller and the digital key.

Step 4: When the detected distance is less than or equal to a specified distance threshold, the Bluetooth controller sends an unlocking request to an unlocking controller in the vehicle.

Step 5: The unlocking controller performs security authentication with the Bluetooth controller.

The unlocking controller may send a random number to the Bluetooth controller. The Bluetooth controller obtains a message authentication code (Message authentication code, MAC) through calculation on the random number by using a preset key, and sends the MAC to the unlocking controller. The unlocking controller also obtains the MAC through calculation on the random number by using the preset key. If the MAC obtained through calculation by the unlocking controller is consistent with the MAC from the Bluetooth controller, the security authentication succeeds; or if the MAC obtained through calculation by the unlocking controller is not consistent with the MAC from the Bluetooth controller, the security authentication fails.

Step 6: After the authentication with the Bluetooth controller performed by the unlocking controller succeeds, the unlocking controller sends a lock opening indication to a lock opening controller.

Step 7: The lock opening controller opens a door lock of the vehicle.

In the foregoing method, a "two-stage" authentication solution is used. In a first stage, the Bluetooth controller performs authentication on the digital key. In a second stage, the unlocking controller performs authentication on the Bluetooth controller. An assumption for using this solution is that the Bluetooth controller is definitely reliable, and when the Bluetooth controller sends a lock opening request to the unlocking controller, the digital key is definitely authenticated. However, this assumption is not true in actual application. The Bluetooth controller is a cheap electronic control unit (electronic control unit, ECU), and the Bluetooth controller is usually implemented via a microcontroller unit (microcontroller unit, MCU) chip. Therefore, security is low. In addition, the Bluetooth controller has complex codes (for example, including a Bluetooth control protocol and an ICCE/a CCC protocol), and provides an interface for external communication. Therefore, the Bluetooth controller is a high-risk component, and is a weak point that an attacker can focus on. Once the Bluetooth controller is attacked and hijacked, an attacker can open the door lock of the vehicle without the digital key. For example, after the attacker hijacks the Bluetooth controller, the attacker may control the Bluetooth controller to skip an authentication process between the Bluetooth controller and the digital key, and directly send the lock opening request to the unlocking controller. After the attacker controls the Bluetooth controller to send the lock opening request, the Bluetooth controller may continue to perform a subsequent normal procedure, and subsequent security authentication between the Bluetooth controller and the unlocking controller is definitely performed, so that the unlocking controller controls the lock opening controller to complete unlocking.

The preceding attack is a typical man-in-the-middle attack. The attacker does not need to crack an authentication process between different devices (for example, a security authentication process between the Bluetooth controller and the unlocking controller), and only needs to hijack the Bluetooth controller to succeed in the attack. Therefore, security of the foregoing unlocking process is very low, and security of the vehicle is greatly affected.

In view of the foregoing problem, embodiments of this application provide a control method, a controller, a device, and a control system. In this solution, a problem of a man-in-the-middle attack in a scenario of touchless unlocking with a digital key can be resolved, and security of a process of touchless unlocking with the digital key can be improved.

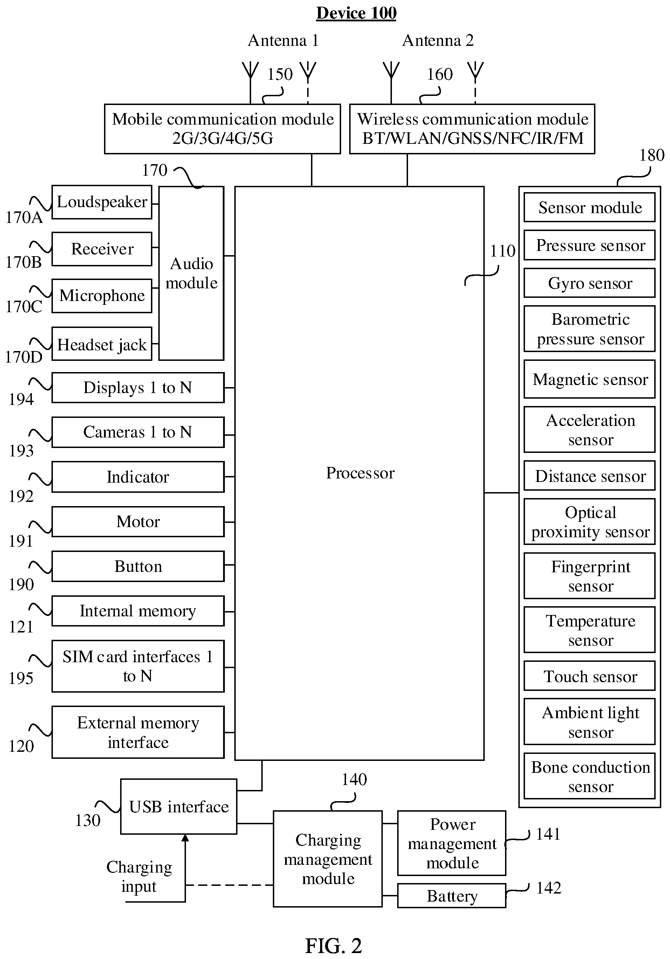

The following describes, with reference to FIG. 2, a structure of a device to which a method according to an embodiment of this application is applicable.

As shown in FIG. 2, the device 100 may include a processor 110, an external memory interface 120, an internal memory 121, a USB interface 130, a charging management module 140, a power management module 141, a battery 142, an antenna 1, an antenna 2, a mobile communication module 150, a wireless communication module 160, an audio module 170, a loudspeaker 170A, a receiver 170B, a microphone 170C, a headset jack 170D, a sensor module 180, a button 190, a motor 191, an indicator 192, a camera 193, a display 194, a SIM card interface 195, and the like.

The sensor module 180 may include a gyro sensor, an acceleration sensor, an optical proximity sensor, a fingerprint sensor, a touch sensor, a temperature sensor, a pressure sensor, a distance sensor, a magnetic sensor, an ambient light sensor, a barometric pressure sensor, a bone conduction sensor, and the like.

It may be understood that the device 100 shown in FIG. 2 is merely an example, and does not constitute a limitation on the device. In addition, the device may have more or fewer components than those shown in the figure, or a combination of two or more components, or an arrangement of different components. The components shown in FIG. 2 may be implemented by hardware that includes one or more signal processing circuits and/or application-specific integrated circuits, software, or a combination of hardware and software.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors. The controller may be a nerve center and a command center of the device 100. The controller may generate an operation control signal based on an instruction operation code and a time sequence signal, to complete control of instruction fetching and instruction execution.

A memory may be disposed in the processor 110, and is configured to store instructions and data. In some embodiments, the memory in the processor 110 is a cache. The memory may store instructions or data that has been recently used or cyclically used by the processor 110. If the processor 110 needs to use the instructions or the data again, the processor may directly invoke the instructions or the data from the memory. This avoids repeated access, reduces waiting time of the processor 110, and improves system efficiency.

Execution of the control method provided in embodiments of this application may be controlled by the processor 110 or completed by invoking another component, for example, invoking a processing program in embodiments of this application stored in the internal memory 121, or invoking, through the external memory interface 120, a processing program in embodiments of this application stored in a third-party device, to control the wireless communication module 160 to perform data communication with another device, to implement intelligence and convenience of the device 100, thereby improving user experience. The processor 110 may include different devices. For example, when a CPU and a GPU are integrated, the CPU and the GPU may cooperate with each other to perform the control method provided in embodiments of this application. For example, some algorithms in the control method are performed by the CPU, and some algorithms are performed by the GPU, to obtain high processing efficiency.

The display 194 is configured to display an image, a video, and the like. The display 194 includes a display panel. In some embodiments, the device 100 may include one or N displays 194, where N is a positive integer greater than 1. The display 194 may be configured to display information input by a user or information provided to a user, and various graphical user interfaces (graphical user interfaces, GUIs).

In embodiments of this application, the display 194 may be an integrated flexible display, or may be a spliced display including two rigid screens and one flexible screen located between the two rigid screens.

The camera 193 (a front-facing camera or a rear-facing camera, or a camera that can serve as a front-facing camera and a rear-facing camera) is configured to capture a static image or a video. Usually, the camera 193 may include a photosensitive element, for example, a lens group and an image sensor. The lens group includes a plurality of lenses (convex lens or concave lens), and is configured to: collect an optical signal reflected by a to-be-photographed object, and transfer the collected optical signal to the image sensor. The image sensor generates an original image of the to-be-photographed object based on the optical signal.

The internal memory 121 may be configured to store executable program code. The executable program code includes instructions. The processor 110 runs the instructions stored in the internal memory 121, to perform various function applications and data processing of the device 100. The internal memory 121 may include a program storage area and a data storage area. The program storage area may store code of an operating system, an application (for example, a function corresponding to a control method), and the like. The data storage area may store data created in a process of using the device 100, and the like.

The internal memory 121 may further store one or more programs corresponding to the algorithm of the control method provided in embodiments of this application. The one or more programs are stored in the internal memory 121 and are configured to be executed by the one or more processors 110. The one or more programs include instructions, and the instructions may be used to perform steps in the following embodiments.

In addition, the internal memory 121 may include a high-speed random access memory, or may include a nonvolatile memory, for example, at least one magnetic disk storage device and a flash memory.

Certainly, the code of the algorithm of the control method provided in embodiments of this application may be further stored in an external memory. In this case, the processor 110 may run, through the external memory interface 120, the code of the algorithm that is of the control method and that is stored in the external memory.

The sensor module 180 may include a gyro sensor, an acceleration sensor, an optical proximity sensor, a fingerprint sensor, a touch sensor, and the like.

The touch sensor is also referred to as a "touch panel". The touch sensor may be disposed on the display 194, and the touch sensor and the display 194 form a touchscreen, which is also referred to as a "touch screen". The touch sensor is configured to detect a touch operation performed on or near the touch sensor. The touch sensor may transfer the detected touch operation to the application processor, to determine a type of the touch event. A visual output related to the touch operation may be provided through the display 194. In some other embodiments, the touch sensor may alternatively be disposed on a surface of the device 100 at a position different from that of the display 194.

A wireless communication function of the device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the device 100 may be configured to cover one or more communication frequency bands.

The mobile communication module 150 may provide a wireless communication solution that is applied to the device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110. In this embodiment of this application, the mobile communication module 150 may be further configured to: exchange information with another device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio apparatus (which is not limited to the loudspeaker 170A, the receiver 170B, or the like), or displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices that integrate at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2. In embodiments of this application, the wireless communication module 160 is configured to establish a connection to another device, and exchange data. Alternatively, the wireless communication module 160 may be configured to access an access point device, send a control instruction to another device, or receive data sent by another device.

In addition, the device 100 may implement an audio function through the audio module 170, the loudspeaker 170A, the receiver 170B, the microphone 170C, the headset jack 170D, the application processor. The device 100 may receive an input of the button 190, and generate a button signal input related to a user setting and function control of the device 100. The device 100 may generate a vibration prompt (for example, an incoming call vibration prompt) through the motor 191. The indicator 192 in the device 100 may be an indicator light, and may be configured to indicate a charging status and a power change, or may be configured to indicate a message, a missed call, a notification, and the like. The SIM card interface 195 in the device 100 is configured to be connected to a SIM card. The SIM card may be inserted into the SIM card interface 195 or removed from the SIM card interface 195, to implement contact with or separation from the device 100.

It should be understood that, during actual application, the device 100 may include more or fewer components than those shown in FIG. 2. This is not limited in embodiments of this application. The device 100 shown in the figure is merely an example, and the device 100 may have more or fewer components than those shown in the figure, or a combination of two or more components, or an arrangement of different components. Components shown in the figure may be implemented by hardware that includes one or more signal processing circuits and/or application-specific integrated circuits, software, or a combination of hardware and software.

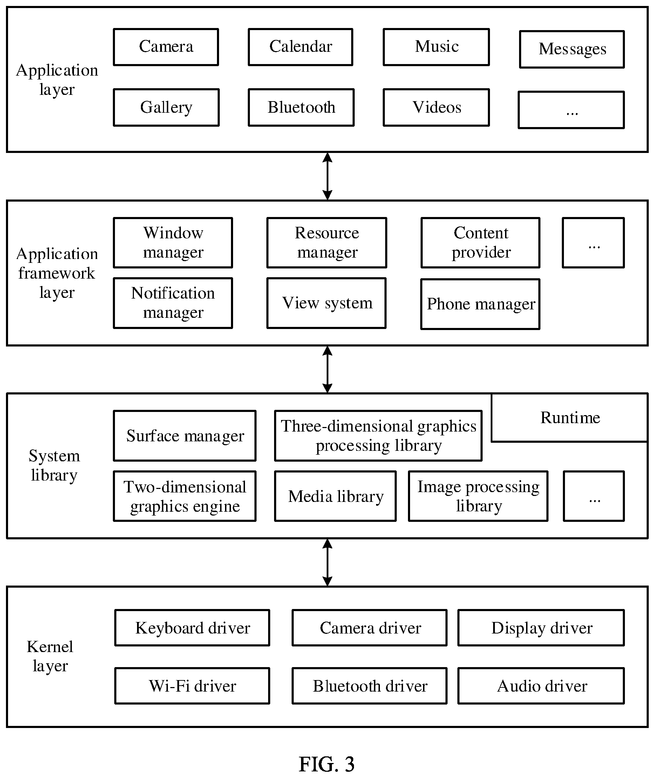

A software system of the device 100 may use a layered architecture, an event-driven architecture, a microkernel architecture, a microservice architecture, or a cloud architecture. In the layered architecture, software is divided into several layers, and each layer has a clear role and task. The layers communicate with each other through a software interface. For example, as shown in FIG. 3, the software architecture may be divided into four layers: an application layer, an application framework layer (Framework, FWK), a runtime and a system library, and a (Linux) kernel (Kernel) layer from top to bottom.

The application layer is an uppermost layer of the operating system, and includes native applications of the operating system, such as Camera, Gallery, Calendar, Bluetooth, Music, Video, and Messages, and may further include a third-party application. An application (application, APP) in embodiments of this application is a software program that can implement one or more specific functions. Usually, a plurality of applications may be installed in a device, such as a camera application and a mailbox application. The application mentioned in the following may be a system application installed before delivery of the device, or may be a third-party application downloaded from a network or obtained from another device by a user in a process of using the device.

Certainly, a developer may compile an application and install the application at the layer. In a possible implementation, the application may be developed by using a Java language, and is completed by invoking an application programming interface (application programming interface, API) provided by an application framework layer. A developer may interact with a bottom layer (for example, a kernel layer) of an operating system through an application framework, to develop an application of the developer.

The application framework layer is an API and a programming framework of the application layer. The application framework layer may include some predefined functions. The application framework layer may include a window manager, a content provider, a view system, a phone manager, a resource manager, a notification manager, and the like.

The window manager is configured to manage a window program. The window manager may obtain a size of a display, determine whether there is a status bar, lock the display (or screen), take a screenshot of the display, and the like.

The content provider is configured to: store and obtain data, and enable the data to be accessed by an application. The data may include information, for example, a file (for example, a document, a video, an image, or an audio) and a text.

The view system includes visual controls, for example, controls that display content, for example, texts, pictures, and documents. The view system may be configured to construct an application. An interface in a display window may include one or more views. For example, a display interface including an SMS message notification icon may include a text display view and an image display view.

The phone manager is configured to provide a communication function of the device. The notification manager enables an application to display notification information in a status bar, and may be configured to convey a notification message. The notification manager may automatically disappear after a short pause without requiring a user interaction.

A runtime includes a core library and a virtual machine. The runtime is responsible for scheduling and management of the system.

The core library of the system includes two parts: one part is a function that needs to be invoked in a Java language, and the other part is the core library of the system. The application layer and the application framework layer run on the virtual machine. Java is used as an example. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager, a media library, a three-dimensional graphics processing library (for example, OpenGL ES), a two-dimensional graphics engine (for example, SGL), and an image processing library. The surface manager is configured to manage a display subsystem and provide fusion of two-dimensional and three-dimensional graphics layers for a plurality of applications. The media library supports playback and recording in a plurality of commonly used audio and video formats, static image files, and the like. The media library may support a plurality of audio and video encoding formats such as MPEG 4, H.564, and MP3. The three-dimensional graphics processing library is configured to implement three-dimensional graphics drawing, image rendering, compositing, layer processing, and the like. The two-dimensional graphics engine is a drawing engine for two-dimensional drawing.

The kernel layer provides a core system service of the operating system. For example, security, memory management, process management, a network protocol stack, and a driver model are all based on the kernel layer. The kernel layer is also used as an abstraction layer between hardware and software stacks. The layer has a plurality of drivers related to the device, and has the following main drivers: a display driver, a keyboard driver used as an input device, a flash driver based on a memory technology device, a camera driver, an audio driver, a Bluetooth driver, a Wi-Fi driver, and the like.

It should be understood that the foregoing function service is merely an example. During actual application, the device may be divided into more or fewer function services based on another factor, or may be divided into functions of each service in another manner, or may not be divided into function services, but work as a whole.

The following describes in detail the solutions provided in this application with reference to specific embodiments.

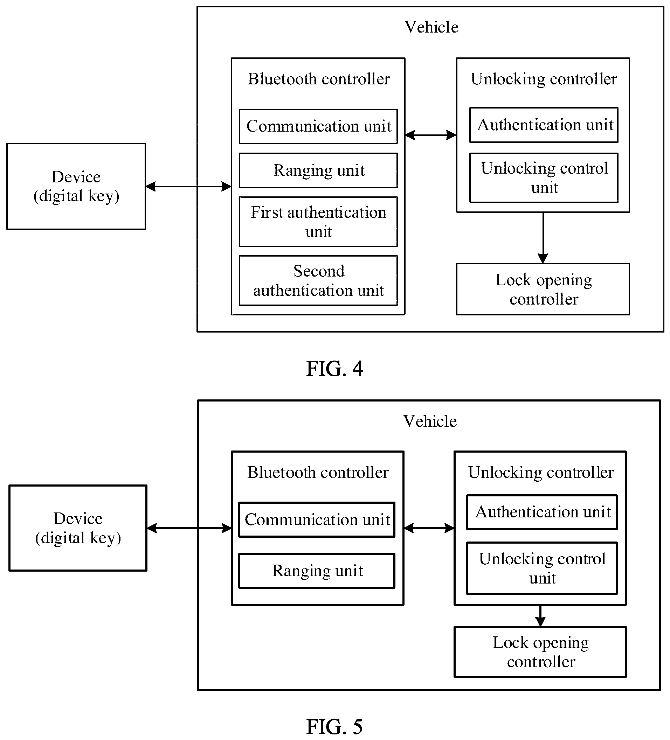

The solutions provided in embodiments of this application may be applied to a control system including a device, a Bluetooth controller, an unlocking controller, and a lock opening controller. For example, the control system may be the control system shown in FIG. 4, FIG. 5, or FIG. 6.

In some embodiments of this application, the Bluetooth controller, the unlocking controller, and the lock opening controller may be deployed on a vehicle, and the Bluetooth controller, the unlocking controller, and the lock opening controller may be configured to collaboratively control an unlocking process of a door lock of the vehicle. A key application matching the vehicle may be installed on the device. After the key application is installed, the device may be used as a digital key to control the unlocking process of the door lock of the vehicle.

In some embodiments of this application, a hardware architecture of the device may be implemented by using but is not limited to the structure shown in FIG. 2, and a software architecture of the device may be implemented by using but is not limited to the architecture shown in FIG. 3.

In a first possible solution, as shown in FIG. 4, a Bluetooth controller may include a communication unit, a ranging unit, a first authentication unit, and a second authentication unit. The communication unit may be configured to communicate with a device or an unlocking controller. Optionally, the communication unit may establish a Bluetooth connection to the device, so that Bluetooth communication can be performed between the device and the Bluetooth controller. The ranging unit may be configured to detect a distance between the device and a vehicle. Optionally, a plurality of Bluetooth nodes controlled by the Bluetooth controller may be deployed in the vehicle, the plurality of Bluetooth nodes may be used as signal receivers in the vehicle, and each Bluetooth node may establish a Bluetooth connection to the device and transmit a Bluetooth wireless signal. The ranging unit may calculate a distance between the device and the Bluetooth controller based on related parameters of Bluetooth wireless signals between the plurality of Bluetooth nodes and the device, and use the distance as the distance between the device and the vehicle. When the Bluetooth controller detects, via the ranging unit, that the distance between the device and the Bluetooth controller is less than or equal to the specified distance threshold, the Bluetooth controller may perform authentication on the device via the first authentication unit. The first authentication unit may be configured to: perform identity authentication on the device, to determine whether the device is a digital key matching the vehicle; and after the authentication succeeds, send an unlocking request to the unlocking controller via the communication unit, so that the unlocking controller performs subsequent unlocking control. If the device is a digital key matching the vehicle, the first authentication unit can successfully perform identity authentication on the device, and may further determine that the device is the digital key matching the vehicle; or if the device is not the digital key matching the vehicle, the first authentication unit cannot successfully perform identity authentication on the device, and the first authentication unit may determine that the device is not the digital key matching the vehicle. The first authentication unit may perform identity authentication on the device based on an ICCE standard or a CCC standard. A system-level Bluetooth digital key standard is defined in the ICCE standard or the CCC standard, and includes a function of performing authentication after communication is established between the digital key and the Bluetooth controller. The first authentication unit may perform an authentication process based on a standard corresponding to the function, to implement identity authentication on a device. The second authentication unit may be configured to perform security authentication with the unlocking controller after the communication unit sends an unlocking request to the unlocking controller. Optionally, the second authentication unit may establish a communication connection to the unlocking controller through a controller area network (controller area network, CAN) bus. Optionally, after the second authentication unit establishes the communication connection to the unlocking controller, the second authentication unit may perform a symmetric-key based challenge response with the unlocking controller, to complete security authentication.

As shown in FIG. 4, the unlocking controller may include an authentication unit and an unlocking control unit. The authentication unit may be configured to perform security authentication with the Bluetooth controller, to ensure security of a process of a communication between the Bluetooth controller and the unlocking controller. The authentication unit may be further configured to perform security authentication with the device, to improve security of a process of unlocking with the digital key. Optionally, the unlocking controller may establish a communication connection to the Bluetooth controller through the CAN bus. Optionally, after the unlocking controller establishes the communication connection to the Bluetooth controller, the authentication unit may perform a symmetric-key based challenge response with the Bluetooth controller, to complete security authentication. In a symmetric-key based challenge response process, the authentication unit may send a random number to the Bluetooth controller, the second authentication unit in the Bluetooth controller may calculate a MAC value based on a preset key stored in the second authentication unit and the random number, and return the MAC value to the unlocking controller, and the authentication unit also calculates a MAC value based on a preset key stored in the authentication unit and the random number. If the MAC value obtained by the authentication unit through calculation is equal to the MAC value returned by the Bluetooth controller, the challenge response succeeds, and it may be determined that the security authentication succeeds. In this case, the unlocking controller may respond to an unlocking request from the Bluetooth controller. If the MAC value obtained by the authentication unit through calculation is not equal to the MAC value returned by the Bluetooth controller, the challenge response fails, and it may be determined that the security authentication fails. In this case, the unlocking controller may not respond to the unlocking request from the Bluetooth controller. After the authentication unit successfully performs security authentication with the Bluetooth controller, the authentication unit may perform security authentication with the device. Optionally, information exchanged between the authentication unit and the device may be forwarded to a peer end via the Bluetooth controller. Optionally, the authentication unit may perform the symmetric-key based challenge response with the device, to complete security authentication. For a specific process, refer to a process in which the authentication unit and the Bluetooth controller perform the symmetric-key based challenge response. Details are not described herein. The unlocking control unit may be configured to respond to the unlocking request from the Bluetooth controller after the authentication unit successfully performs security authentication with the Bluetooth controller. After the unlocking controller successfully performs security authentication with the Bluetooth controller, the unlocking controller may control a lock opening controller via the unlocking control unit, so that the lock opening controller opens a door lock of the vehicle.

The lock opening controller is configured to control the door lock of the vehicle. In this embodiment of this application, the lock opening controller may be controlled by the unlocking controller. Specifically, the lock opening controller may open the door lock of the vehicle according to an indication of the unlocking controller.

In a second possible solution, as shown in FIG. 5, a Bluetooth controller may include a communication unit and a ranging unit. For functions of the communication unit and the ranging unit, refer to descriptions in the foregoing embodiments. Details are not described herein. In some embodiments of this application, when the Bluetooth controller detects, via the ranging unit, that a distance between a device and a vehicle is less than or equal to a specified distance threshold, the Bluetooth controller may send an unlocking request to an unlocking controller.

The unlocking controller may include an authentication unit and an unlocking control unit. The authentication unit is configured to perform identity authentication on the device. If the device is a digital key matching the vehicle, the authentication unit can successfully perform identity authentication on the device, and may further determine that the device is the digital key matching the vehicle; or if the device is not the digital key matching the vehicle, the authentication unit cannot successfully perform identity authentication on the device, and the authentication unit may determine that the device is not the digital key matching the vehicle. Optionally, the authentication unit may perform identity authentication on the device based on an ICCE standard or a CCC standard. After the unlocking controller successfully performs identity authentication on the device via the authentication unit, the unlocking controller may control a lock opening controller via the unlocking control unit, so that the lock opening controller unlocks a door lock of the vehicle. For a function of the unlocking control unit, refer to the function of the unlocking control unit in the foregoing embodiments. Details are not described herein. Optionally, information exchanged between the unlocking controller and the device may be forwarded via the Bluetooth controller. In this case, the unlocking controller and the device may communicate with each other without establishing a direct communication connection. Certainly, the unlocking controller may alternatively establish the direct communication connection (for example, a Bluetooth connection) to the device and then perform identity authentication on the device. A communication manner between the unlocking controller and the device is not specifically limited in embodiments of this application.

For a function of the lock opening controller, refer to the function of the lock opening controller in the foregoing embodiments. Details are not described herein.

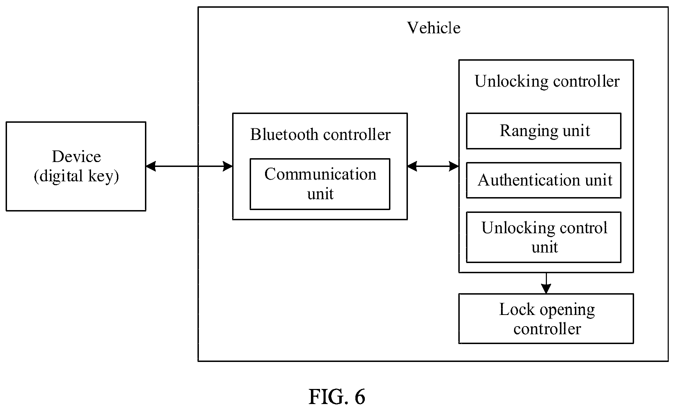

In a third possible solution, as shown in FIG. 6, a Bluetooth controller may include a communication unit. For functions of the communication unit, refer to descriptions in the foregoing embodiments. Details are not described herein.

An unlocking controller may include a ranging unit, an authentication unit, and an unlocking control unit. The ranging unit is configured to detect a distance between a device and a vehicle. Optionally, a plurality of Bluetooth nodes controlled by the Bluetooth controller may be deployed in the vehicle, the plurality of Bluetooth nodes may be used as signal receivers in the vehicle, and each Bluetooth node may establish a Bluetooth connection to the device and transmit a Bluetooth wireless signal. The ranging unit in the unlocking controller may obtain related parameters of Bluetooth wireless signals between the plurality of Bluetooth nodes and the device from the Bluetooth controller, calculate a distance between the device and the Bluetooth controller based on the obtained parameters, and use the distance as the distance between the device and the vehicle. When the unlocking controller detects, via the ranging unit, that the distance between the device and the vehicle is less than or equal to a specified distance threshold, the unlocking controller may perform identity authentication on the device via the authentication unit. The authentication unit may be configured to perform identity authentication on the device. If the device is a digital key matching the vehicle, the authentication unit can successfully perform identity authentication on the device, and may further determine that the device is the digital key matching the vehicle; or if the device is not the digital key matching the vehicle, the authentication unit cannot successfully perform identity authentication on the device, and the authentication unit may determine that the device is not the digital key matching the vehicle. Optionally, the authentication unit may perform identity authentication on the device based on an ICCE standard or a CCC standard. For a function of the unlocking control unit, refer to the function of the unlocking control unit in the foregoing embodiments. Details are not described herein.

For a function of the lock opening controller, refer to the function of the lock opening controller in the foregoing embodiments. Details are not described herein.

It should be understood that the functional units (for example, functional units such as the communication unit, the ranging unit, and the authentication unit) in the foregoing embodiments are merely examples. During actual application, more or fewer functional units may be obtained through division based on other factors, or functions of the units may be obtained through division in another manner, or functional units may not be obtained through division, but work as a whole.

The following describes the solutions provided in embodiments of this application by using an example in which the solutions are applied to a scenario of unlocking a door lock of a vehicle. For an execution method used when the solutions provided in embodiments of this application are applied to another scenario, refer to the following related descriptions. Details are not described in embodiments of this application.

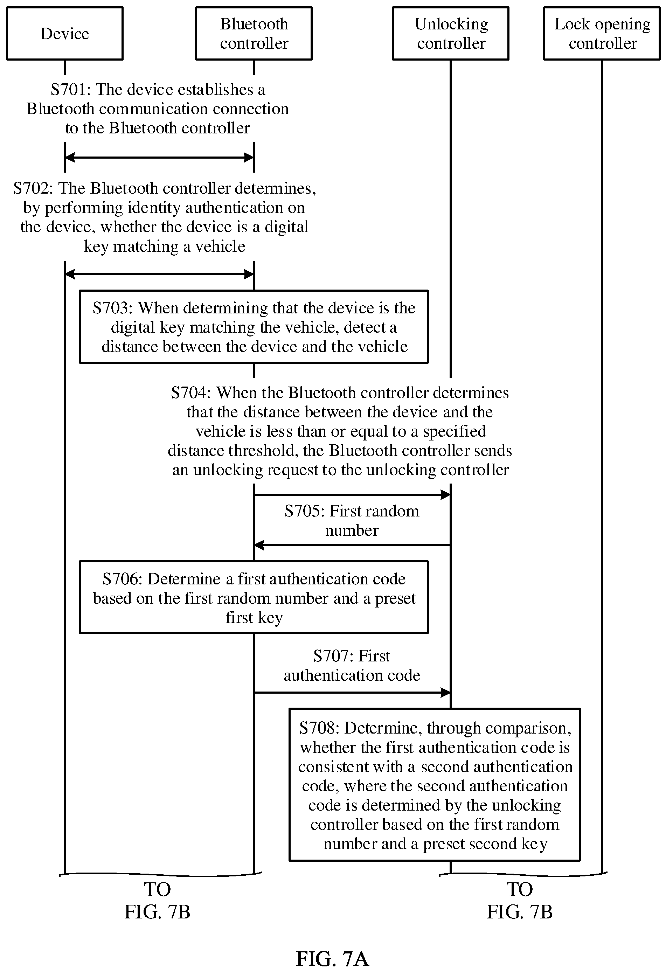

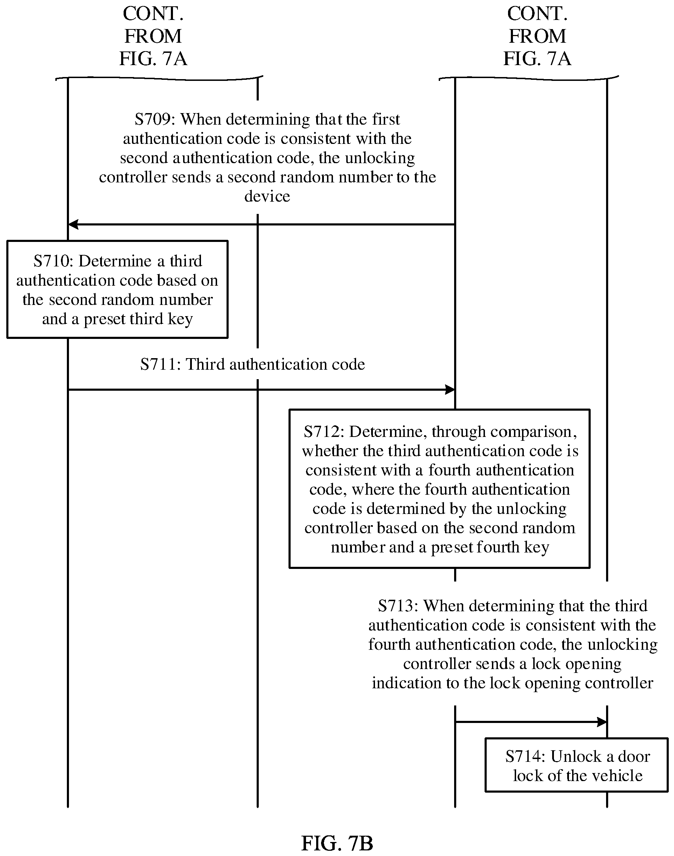

When the control system shown in FIG. 4 is used, as shown in FIG. 7A and FIG. 7B, a control method provided in an embodiment of this application may include the following steps.

S701: A device establishes a Bluetooth communication connection to a Bluetooth controller.

For example, step S701 may be cooperatively completed by the device and the communication unit in the Bluetooth controller in the control system shown in FIG. 4.

S702: The Bluetooth controller determines, by performing identity authentication on the device, whether the device is a digital key matching a vehicle.

In some embodiments of this application, the Bluetooth controller and the device may perform identity authentication on the device based on an ICCE standard or a CCC standard. If the authentication succeeds, it is determined that the device is the digital key matching the vehicle; or if the authentication fails, it is determined that the device is not the digital key matching the vehicle.

For example, step S702 may be cooperatively completed by the device and the first authentication unit in the Bluetooth controller in the control system shown in FIG. 4.

S703: When the Bluetooth controller determines that the device is the digital key matching the vehicle, the Bluetooth controller detects a distance between the device and the vehicle.

In some embodiments of this application, the Bluetooth controller may obtain a parameter of a Bluetooth wireless signal between a Bluetooth node in the vehicle and the device, calculate a distance between the device and the Bluetooth controller based on the parameter, and use the distance between the device and the Bluetooth controller as the distance between the device and the vehicle.

For example, step S703 may be completed by the ranging unit in the Bluetooth controller in the control system shown in FIG. 4.

S704: When the Bluetooth controller determines that the distance between the device and the vehicle is less than or equal to a specified distance threshold, the Bluetooth controller sends an unlocking request to the unlocking controller.

In some embodiments of this application, the specified distance threshold may be used as a basis for determining whether the user carries the digital key and enters a range close enough to the vehicle. When it is determined that the digital key is the digital key matching the vehicle, when the digital key is in the range close enough to the vehicle, the digital key can unlock a door lock of the vehicle. An effective communication distance of the Bluetooth communication connection established between the device and the Bluetooth controller is usually long, and may reach more than ten meters or even tens of meters. A prerequisite for unlocking with the digital key is that the user needs to carry the digital key and approach the vehicle and is close enough to the vehicle. Therefore, even if the Bluetooth controller determines that the device is the digital key matching the vehicle, the Bluetooth controller needs to further determine whether the distance between the device and the vehicle is short enough. Therefore, the Bluetooth controller may detect the distance between the device and the vehicle, and determine, based on a value relationship between the distance and the specified distance threshold, whether the distance between the device and the vehicle is short enough, to determine whether the device can unlock the door lock of the vehicle. When the Bluetooth controller determines that the distance between the device and the vehicle is less than or equal to the specified distance threshold, it may be considered that the current scenario is a scenario in which the user carries the digital key and enters the range close enough to the vehicle. In this case, it is determined that the device can unlock the door lock of the vehicle. When the Bluetooth controller determines that the distance between the device and the vehicle is greater than the specified distance threshold, it may be considered that the current scenario is a scenario in which the user carries the digital key but does not enter the range close enough to the vehicle. In this case, it is determined that the device cannot unlock the door lock of the vehicle.

In some embodiments of this application, the specified distance threshold may be a value preconfigured by the Bluetooth controller or may be a value manually preset by the user based on experience.

In some embodiments of this application, before the Bluetooth controller sends the unlocking request to the unlocking controller, the Bluetooth controller may establish a communication connection to the unlocking controller. Optionally, the Bluetooth controller may establish the communication connection to the unlocking controller through a CAN bus.

For example, step S704 may be cooperatively completed by the ranging unit and the communication unit in the Bluetooth controller in the control system shown in FIG. 4.

S705: The unlocking controller sends a first random number to the Bluetooth controller.

The first random number may be a value randomly generated by the unlocking controller.

For example, step S705 may be completed by the authentication unit in the unlocking controller in the control system shown in FIG. 4.

S706: The Bluetooth controller determines a first authentication code based on the first random number and a preset first key.

The first key is a specified key prestored in the Bluetooth controller. The Bluetooth controller may perform calculation on the first random number and the first key according to a preset first algorithm, to obtain the first authentication code.

In some embodiments of this application, the first algorithm may be an encryption algorithm pre-agreed on by the Bluetooth controller and the unlocking controller.

For example, step S706 may be completed by the second authentication unit in the Bluetooth controller in the control system shown in FIG. 4.

S707: The Bluetooth controller sends the first authentication code to the unlocking controller.

For example, step S707 may be completed by the communication unit in the Bluetooth controller in the control system shown in FIG. 4.

S708: The unlocking controller determines, through comparison, whether the first authentication code is consistent with a second authentication code, where the second authentication code is determined by the unlocking controller based on the first random number and a preset second key.

The second key is a specified key prestored in the unlocking controller. The unlocking controller may perform calculation on the first random number and the second key according to the preset first algorithm, to obtain the second authentication code.

The method described in steps S705 to S708 is a method for performing security authentication by the unlocking controller and the Bluetooth controller. The first key stored in the Bluetooth controller and the second key stored in the unlocking controller may be the same (for example, the first key stored in the Bluetooth controller and the second key stored in the unlocking controller may be a same key pre-agreed on by the Bluetooth controller and the unlocking controller, or may be a same key allocated to the Bluetooth controller and the unlocking controller), or may be different. When the first key stored in the Bluetooth controller is the same as the second key stored in the unlocking controller, the first authentication code obtained by the Bluetooth controller through calculation is the same as the second authentication code obtained by the unlocking controller through calculation. In this case, the unlocking controller may determine that the security authentication succeeds, and subsequent steps may continue to be performed. When the first key stored in the Bluetooth controller is different from the second key stored in the unlocking controller, the first authentication code obtained by the Bluetooth controller through calculation is different from the second authentication code obtained by the unlocking controller through calculation. In this case, the unlocking controller may determine that the security authentication fails, and the current procedure may be terminated.

For example, step S708 may be completed by the authentication unit in the unlocking controller in the control system shown in FIG. 4.

S709: When the unlocking controller determines that the first authentication code is consistent with the second authentication code, the unlocking controller sends a second random number to the device.

The second random number may be a value randomly generated by the unlocking controller.

For example, step S709 may be cooperatively completed by the authentication unit and the unlocking control unit in the unlocking controller in the control system shown in FIG. 4.

In some embodiments of this application, the unlocking controller may send the second random number to the device through forwarding by the Bluetooth controller.

S710: The device determines a third authentication code based on the second random number and a preset third key.

The third key is a specified key prestored in the device. The device may perform calculation on the second random number and the third key according to a preset second algorithm, to obtain the third authentication code.

In some embodiments of this application, the second algorithm may be an encryption algorithm pre-agreed on by the device and the unlocking controller. The second algorithm and the first algorithm may be the same, or may be different.

S711: The device sends the third authentication code to the unlocking controller.

In some embodiments of this application, the device may send the third authentication code to the unlocking controller through forwarding by the Bluetooth controller.

S712: The unlocking controller determines, through comparison, whether the third authentication code is consistent with a fourth authentication code, where the fourth authentication code is determined by the unlocking controller based on the second random number and a preset fourth key.

The fourth key is a specified key prestored in the unlocking controller. The unlocking controller may perform calculation on the second random number and the fourth key according to the preset second algorithm, to obtain the fourth authentication code.

The method described in steps S709 to S712 is a method for performing security authentication by the unlocking controller and the device. The third key stored in the device and the fourth key stored in the unlocking controller may be the same (for example, the third key stored in the device and the fourth key stored in the unlocking controller may be a same key pre-agreed on by the device and the unlocking controller, or may be a same key allocated to the device and the unlocking controller), or may be different (for example, different keys are separately assigned to the device and the unlocking controller). When the third key stored in the device is the same as the fourth key stored in the unlocking controller, the third authentication code obtained by the device through calculation is the same as the fourth authentication code obtained by the unlocking controller through calculation. In this case, the unlocking controller may determine that the security authentication succeeds, and subsequent steps may continue to be performed. When the third key stored in the device is different from the fourth key stored in the unlocking controller, the third authentication code obtained by the device through calculation is different from the fourth authentication code obtained by the unlocking controller through calculation. In this case, the unlocking controller may determine that the security authentication fails, and the current procedure may be terminated.

In some embodiments of this application, the second key and the fourth key that are stored in the unlocking controller are different.

For example, step S712 may be completed by the authentication unit in the unlocking controller in the control system shown in FIG. 4.

S713: When the unlocking controller determines that the third authentication code is consistent with the fourth authentication code, the unlocking controller sends a lock opening indication to a lock opening controller.

When the third authentication code is consistent with the fourth authentication code, the unlocking controller may determine that security authentication between the unlocking controller and the device succeeds, and determine that unlocking can be performed. The unlocking controller may indicate the lock opening controller to perform unlocking, to implement touchless unlocking.

Optionally, the unlocking controller may send the lock opening indication to the lock opening controller through a CAN bus.

For example, step S713 may be cooperatively completed by the authentication unit and the unlocking control unit in the unlocking controller in the control system shown in FIG. 4.

S714: The lock opening controller unlocks the door lock of the vehicle.

After the lock opening controller unlocks the door lock of the vehicle, the user can directly open a vehicle door without performing another operation, to experience touchless unlocking.

In the foregoing method, after the unlocking controller successfully performs security authentication with the Bluetooth controller, the unlocking controller further needs to perform security authentication with the device once, and can unlock the door lock only after successfully performing security authentication with the device. Compared with the conventional solution of unlocking with a digital key shown in FIG. 1, in the solution provided in this application, after the unlocking controller and the Bluetooth controller successfully perform security authentication (as first anti-theft authentication), security authentication (as second anti-theft authentication) between the unlocking controller and the device is added. Based on the method, when an attacker hijacks the Bluetooth controller and controls the Bluetooth controller to send the unlocking request to the unlocking controller, because the attacker does not hold the digital key, the security authentication between the unlocking controller and the device inevitably fails (which is represented as that there is no response to the security authentication initiated by the unlocking controller, or the Bluetooth controller notifies the unlocking controller that the digital key does not exist, or the like). Therefore, the unlocking controller does not control the lock opening controller to perform unlocking, so that the attack of the attacker is invalid. Therefore, in the solution provided in this application, a problem of a man-in-the-middle attack on the Bluetooth controller in a conventional method can be resolved while touchless unlocking with the digital key is implemented, and security of a process of unlocking with the digital key can be improved.

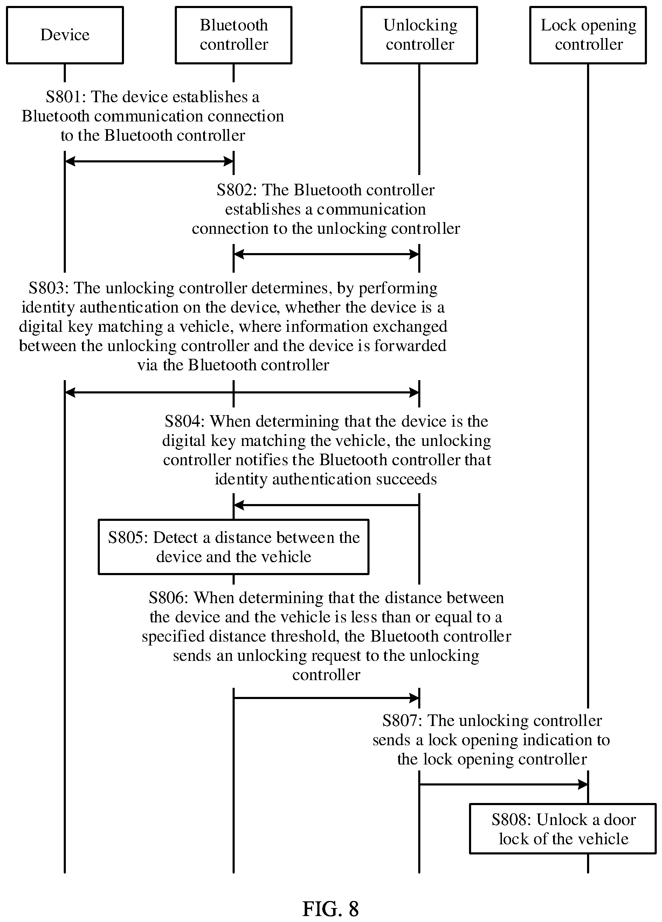

When the control system shown in FIG. 5 is used, as shown in FIG. 8, a control method provided in an embodiment of this application may include the following steps.

S801: A device establishes a Bluetooth communication connection to a Bluetooth controller.

S802: The Bluetooth controller establishes a communication connection to an unlocking controller.

S803: The unlocking controller determines, by performing identity authentication on the device, whether the device is a digital key matching a vehicle, where information exchanged between the unlocking controller and the device is forwarded via the Bluetooth controller.

In some embodiments of this application, the unlocking controller and the device may perform identity authentication on the device based on an ICCE standard or a CCC standard. If the authentication succeeds, it is determined that the device is the digital key matching the vehicle; or if the authentication fails, it is determined that the device is not the digital key matching the vehicle.

For example, when the unlocking controller performs identity authentication on the device based on the ICCE standard, the unlocking controller and the device may specifically perform identity authentication on the device by performing a symmetric-key based challenge response. In this case, the information exchanged between the unlocking controller and the device includes information that needs to be transmitted between the unlocking controller and the device in a process of performing the challenge response, for example, information like a random number and an authentication code.

For example, step S803 may be cooperatively completed by the device, the Bluetooth controller, and the authentication unit in the unlocking controller in the control system shown in FIG. 5.

S804: When the unlocking controller determines that the device is the digital key matching the vehicle, the unlocking controller notifies the Bluetooth controller that identity authentication succeeds.

S805: The Bluetooth controller detects a distance between the device and the vehicle.

For example, step S805 may be completed by the ranging unit in the Bluetooth controller in the control system shown in FIG. 5.

S806: When the Bluetooth controller determines that the distance between the device and the vehicle is less than or equal to a specified distance threshold, the Bluetooth controller sends an unlocking request to the unlocking controller.

For example, step S806 may be cooperatively completed by the ranging unit and the communication unit in the Bluetooth controller in the control system shown in FIG. 5.

For specific implementations of steps S805 and S806, refer to the method in steps S703 and S704. Details are not described herein again.

S807: The lock opening controller sends a lock opening indication to an unlocking controller.

For example, step S807 may be completed by the unlocking control unit in the unlocking controller in the control system shown in FIG. 5.

S808: The lock opening controller unlocks a door lock of the vehicle.

In the foregoing steps S807 and S808, the unlocking controller may indicate the lock opening controller to perform unlocking, to implement touchless unlocking. After the lock opening controller unlocks the door lock of the vehicle, the user can directly open a vehicle door without performing another operation, to experience touchless unlocking.

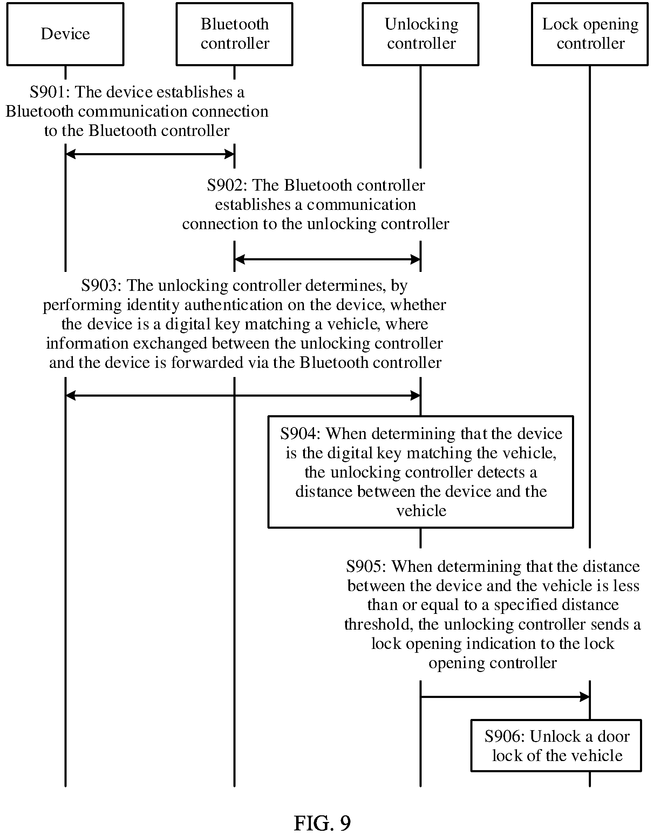

When the control system shown in FIG. 6 is used, as shown in FIG. 9, a control method provided in an embodiment of this application may include the following steps.

S901: A device establishes a Bluetooth communication connection to a Bluetooth controller.

S902: The Bluetooth controller establishes a communication connection to an unlocking controller.

S903: The unlocking controller determines, by performing identity authentication on the device, whether the device is a digital key matching a vehicle, where information exchanged between the unlocking controller and the device is forwarded via the Bluetooth controller.

In some embodiments of this application, the unlocking controller and the device may perform identity authentication on the device based on an ICCE standard or a CCC standard. If the authentication succeeds, it is determined that the device is the digital key matching the vehicle; or if the authentication fails, it is determined that the device is not the digital key matching the vehicle.

For example, step S903 may be cooperatively completed by the device, the Bluetooth controller, and the authentication unit in the unlocking controller in the control system shown in FIG. 6.

S904: When the unlocking controller determines that the device is the digital key matching the vehicle, the unlocking controller detects a distance between the device and the vehicle.

In some embodiments of this application, the unlocking controller may obtain a parameter of a Bluetooth wireless signal between a Bluetooth node in the vehicle and the device from the Bluetooth controller, calculate a distance between the device and the Bluetooth controller based on the parameter, and use the distance between the device and the Bluetooth controller as the distance between the device and the vehicle.

For example, step S904 may be completed by the ranging unit in the unlocking controller in the control system shown in FIG. 6.

S905: When the unlocking controller determines that the distance between the device and the vehicle is less than or equal to a specified distance threshold, the unlocking controller sends a lock opening indication to a lock opening controller.

S906: The lock opening controller unlocks a door lock of the vehicle.

In the method shown in FIG. 8 or FIG. 9, compared with a "two-stage" authentication manner (that is, the Bluetooth controller performs authentication on the device once, and the unlocking controller performs authentication on the Bluetooth controller once) in the conventional solution of unlocking via the digital key shown in FIG. 1, in a "one-stage" authentication manner (that is, the unlocking controller performs authentication on the device once) used in the digital key unlocking process, a man-in-the-middle, namely, the Bluetooth controller, can be prevented from participating in authentication, so that an attacker cannot perform a man-in-the-middle attack. In the "one-stage" authentication manner, authentication on the digital key is directly performed between the unlocking controller and the device, and the Bluetooth controller only provides an information transmission channel. Therefore, even if the Bluetooth controller is hijacked, an attacker cannot perform a man-in-the-middle attack. Therefore, in the solution provided in this application, a problem of a man-in-the-middle attack on the Bluetooth controller in a conventional method can be resolved while touchless unlocking with the digital key is implemented, and security of a process of unlocking with the digital key can be improved.

It should be noted that specific implementation procedures provided in the foregoing instances are merely examples of the method procedures applicable to embodiments of this application. A performing sequence of the steps may be correspondingly adjusted based on an actual requirement, or another step may be added, or some steps may be reduced. For example, step S801 and step S802 may be performed simultaneously, or either step may be performed first.

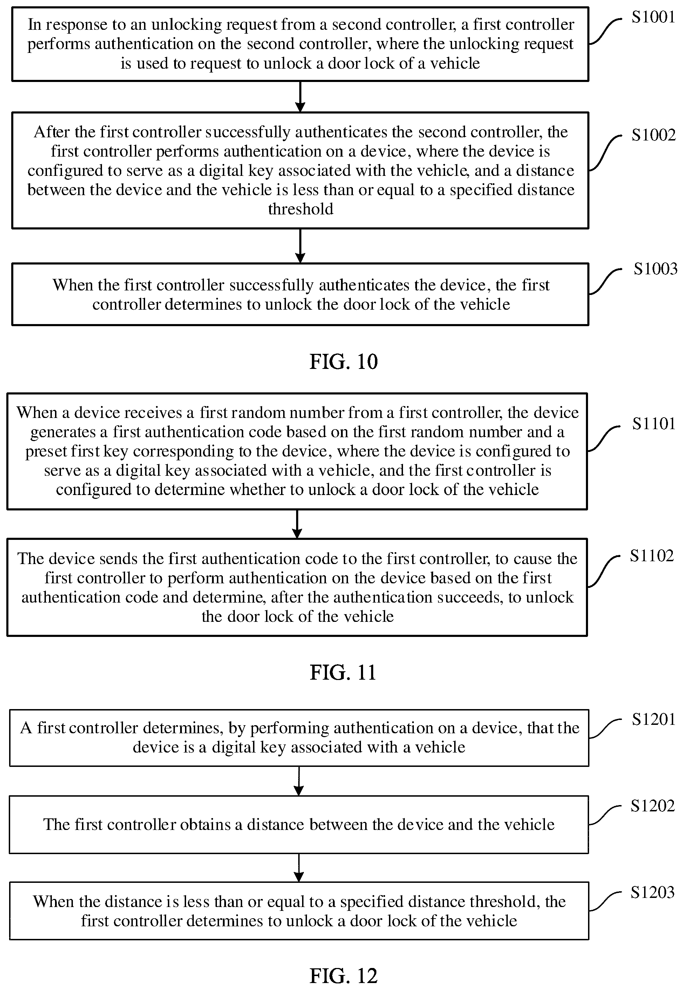

According to the foregoing embodiment and same technical concepts, an embodiment of this application further provides a control method. As shown in FIG. 10, the method may include the following steps.

S1001: In response to an unlocking request from a second controller, a first controller performs authentication on the second controller, where the unlocking request is used to request to unlock a door lock of a vehicle.

In some embodiments of this application, the first controller may be an unlocking controller deployed in the vehicle, and the second controller may be a Bluetooth controller deployed in the vehicle.

For example, the first controller may be the unlocking controller in the foregoing embodiment, and the second controller may be the Bluetooth controller in the foregoing embodiment. For a method for performing authentication on the second controller by the first controller, refer to the method for performing authentication on the Bluetooth controller by the unlocking controller in the foregoing embodiment, for example, refer to the method described in steps S705 to S708 in the foregoing embodiment. Details are not described herein.

In some embodiments of this application, before the first controller receives the unlocking request from the second controller, the second controller may establish a communication connection to a device and perform authentication on the device, after the device is successfully authenticated, detect a distance between the second controller and the device, and determine that the distance between the second controller and the device is less than or equal to a specified distance threshold. For this process, refer to related descriptions in the foregoing embodiment, for example, refer to the method described in steps S701 to S704 in the foregoing embodiment. Details are not described herein.

S1002: After the first controller successfully authenticates the second controller, the first controller performs authentication on a device, where the device is configured to serve as a digital key associated with the vehicle, and a distance between the device and the vehicle is less than or equal to a specified distance threshold.

In some embodiments of this application, when the first controller performs authentication on the device, the first controller may send a first random number to the device, and receive a first authentication code from the device. The first authentication code is generated by the device based on the first random number and a preset first key corresponding to the device. When the first controller determines that the first authentication code is the same as a second authentication code, the first controller determines that the device is successfully authenticated, where the second authentication code is generated by the first controller based on the first random number and a preset second key corresponding to the first controller.

For the first random number, the first key, the first authentication code, the second random number, the second key, and the second authentication code, refer to related descriptions in the foregoing embodiments. Details are not described herein. For a process in which the first controller performs authentication on the device, refer to the method for performing authentication on the device by the unlocking controller in the foregoing embodiment, for example, refer to the method in steps S709 to S712 in the foregoing embodiment. Details are not described herein.

In some embodiments of this application, in a process in which the first controller performs authentication on the device, information exchanged between the first controller and the device may be forwarded via the second controller. For example, when the first controller sends the first random number to the device, the first random number may be forwarded to the device via the second controller. For another example, when the first controller receives the first authentication code from the device, the first controller may receive the first authentication code that is from the device and that is forwarded by the second controller.

S1003: When the first controller successfully authenticates the device, the first controller determines to unlock the door lock of the vehicle.

In some embodiments of this application, after the first controller determines to unlock the door lock of the vehicle, the first controller may send an unlocking indication to a third controller, where the third controller is configured to control the door lock of the vehicle, and the unlocking indication indicates to unlock the door lock of the vehicle.

For example, the third controller may be the lock opening controller in the foregoing embodiment.

In the foregoing method, for specific steps performed by the first controller, refer to related descriptions in the foregoing embodiments. Details are not described herein.

According to the foregoing embodiment and same technical concepts, an embodiment of this application further provides a control method. As shown in FIG. 11, the method may include the following steps.

S1101: When a device receives a first random number from a first controller, the device generates a first authentication code based on the first random number and a preset first key corresponding to the device, where the device is configured to serve as a digital key associated with a vehicle, and the first controller is configured to determine whether to unlock a door lock of the vehicle.

In some embodiments of this application, the first controller may be an unlocking controller deployed in the vehicle, and the second controller may be a Bluetooth controller deployed in the vehicle.

For example, the device may be the device in the foregoing embodiments, and the first controller may be the unlocking controller in the foregoing embodiments.

In some embodiments of this application, the first random number received by the device may be a random number sent to the device after the first controller successfully authenticates the second controller. For example, the second controller may be the Bluetooth controller in the foregoing embodiment.

For the first random number, the first key, and the first authentication code, refer to related descriptions in the foregoing embodiments. Details are not described herein.

S1102: The device sends the first authentication code to the first controller, to cause the first controller to perform authentication on the device based on the first authentication code and determine, after the authentication succeeds, to unlock the door lock of the vehicle.

Steps S1101 and S1102 may be used as a method performed by the device in the process in which the first controller performs authentication on the device in step S1002. Based on the method, the device and the first controller may perform the process of performing authentication on the device. In this way, the first controller performs authentication on the device, and after the authentication succeeds, determines to unlock the door lock of the vehicle associated with the device.

In some embodiments of this application, in the foregoing method, information exchanged between the device and the first controller may be forwarded via the second controller. For example, when the device receives the first random number from the first controller, the device may receive the first random number that is from the first controller and that is forwarded by the second controller. For another example, when the device sends the first authentication code to the first controller, the first authentication code may be forwarded to the first controller via the second controller.

In the foregoing method, for specific steps performed by the device, refer to related descriptions in the foregoing embodiments. Details are not described herein.

According to the foregoing embodiment and same technical concepts, an embodiment of this application further provides a control method. As shown in FIG. 12, the method may include the following steps.

S1201: A first controller determines, by performing authentication on a device, that the device is a digital key associated with a vehicle.

In some embodiments of this application, the first controller may be an unlocking controller deployed in the vehicle.

For example, the first controller may be the unlocking controller in the foregoing embodiment, and the device may be the device in the foregoing embodiment.

In some embodiments of this application, the first controller may perform authentication on the device based on an intelligent car connectivity industry ecosystem alliance ICCE standard or a car connectivity consortium CCC standard; and when the device is successfully authenticated, the first controller may determine that the device is the digital key associated with the vehicle. In some embodiments of this application, in a process in which the first controller performs authentication on the device, information exchanged between the first controller and the device may be forwarded via a second controller. For a specific process in which the first controller performs authentication on the device, refer to related descriptions in the foregoing embodiments. For example, refer to the method described in step S803 or step S903 in the foregoing embodiment. Details are not described herein.

In some embodiments of this application, the device may perform an authentication procedure with the first controller, to cause the first controller to perform authentication on the device and determine, after the authentication succeeds, to unlock a door lock of the vehicle, where the authentication procedure is used by the first controller to perform authentication on the device. For details about an execution process of the authentication procedure, refer to related descriptions in the foregoing embodiments. Details are not described herein.

S1202: The first controller obtains a distance between the device and the vehicle.

In an optional implementation, the first controller may obtain ranging reference information from the second controller, and calculate the distance between the device and the vehicle based on the ranging reference information, where the second controller is configured to collect the ranging reference information, and the ranging reference information is used to determine the distance between the device and the vehicle. For example, the second controller may be the Bluetooth controller in the foregoing embodiment, and the ranging reference information may include the parameter of the Bluetooth wireless signal between the Bluetooth node in the vehicle and the device in the foregoing embodiment.

In another optional implementation, the first controller may directly obtain the distance between the device and the vehicle from the second controller. The second controller is configured to measure the distance between the device and the vehicle. For example, the second controller may be the Bluetooth controller in the foregoing embodiment.

S1203: When the distance is less than or equal to a specified distance threshold, the first controller determines to unlock the door lock of the vehicle.

In some embodiments of this application, after the first controller determines to unlock the door lock of the vehicle, the first controller may send an unlocking indication to a third controller, where the third controller is configured to control the door lock of the vehicle, and the unlocking indication indicates to unlock the door lock of the vehicle.

For example, the third controller may be the lock opening controller in the foregoing embodiment. The distance threshold may be the specified distance threshold in the foregoing embodiment.

In the foregoing method, for specific steps performed by the first controller and the device, refer to related descriptions in the foregoing embodiments. Details are not described herein.

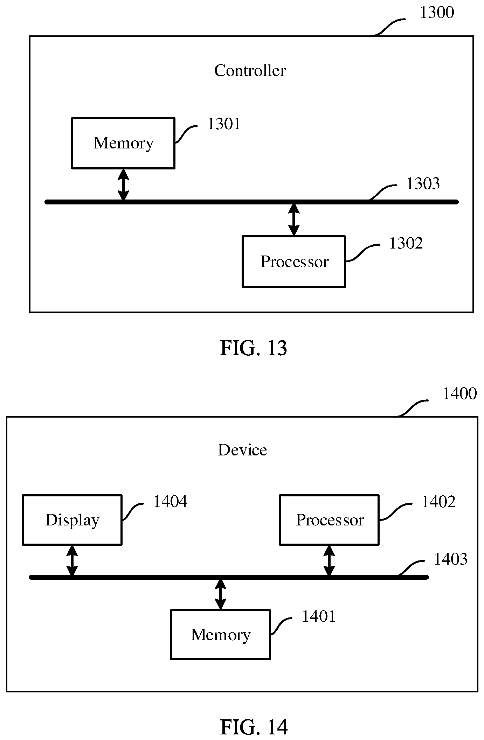

Based on the foregoing embodiments and a same technical concept, an embodiment of this application further provides a controller. The controller may be configured to implement the control method provided in embodiments of this application, and may be specifically configured to perform the method performed by any controller in the foregoing embodiments. As shown in FIG. 13, a controller 1300 may include a memory 1301, one or more processors 1302, and one or more programs (not shown in the figure). The foregoing devices may be coupled through one or more communication buses 1303.

The memory 1301 stores one or more programs (code), and the one or more programs include instructions. The one or more processors 1302 invoke the instructions stored in the memory 1301, so that the controller 1300 performs the control method that is applied to any controller and that is provided in embodiments of this application.

During specific implementation, the memory 1301 may include a high-speed random access memory, and may also include a nonvolatile memory, for example, one or more magnetic disk storage devices, a flash storage device, or another nonvolatile solid-state storage device. The memory 1301 may be configured to store an implementation program in this embodiment of this application. The memory 1301 may further store a network communication program. The network communication program may be used to communicate with one or more additional devices, one or more user equipments, one or more network devices, and one or more controllers.

The one or more processors 1302 may be a general-purpose central processing unit (Central Processing Unit, CPU), a microprocessor, an application-specific integrated circuit (Application-Specific Integrated Circuit, ASIC), or one or more integrated circuits configured to control execution of programs of the solutions of this application.

It should be noted that FIG. 13 is merely an implementation of the controller 1300 according to this embodiment of this application. During actual application, the controller 1300 may further include more or fewer components. This is not limited herein.

Based on the foregoing embodiments and a same technical concept, an embodiment of this application further provides a device. The device may be configured to implement the control method provided in embodiments of this application, and may be specifically configured to perform the method performed by the device in the foregoing embodiments. As shown in FIG. 14, a device 1400 may include a memory 1401, one or more processors 1402, and one or more programs (not shown in the figure). The foregoing devices may be coupled through one or more communication buses 1403. Optionally, the device 1400 may further include a display 1404.

The memory 1401 stores one or more programs (code), and the one or more programs include instructions. The one or more processors 1402 invoke the instructions stored in the memory 1401, so that the device 1400 performs the control method that is applied to the device and that is provided in embodiments of this application.

During specific implementation, the memory 1401 may include a high-speed random access memory, and may also include a nonvolatile memory, for example, one or more magnetic disk storage devices, a flash storage device, or another nonvolatile solid-state storage device. The memory 1401 may store an operating system (referred to as a system below), for example, an embedded operating system like Android, iOS, Windows, or Linux. The memory 1401 may be configured to store an implementation program in this embodiment of this application. The memory 1401 may further store a network communication program. The network communication program may be used to communicate with one or more additional devices, one or more user equipments, one or more network devices, and one or more controllers.

The one or more processors 1402 may be a general-purpose central processing unit (Central Processing Unit, CPU), a microprocessor, an application-specific integrated circuit (Application-Specific Integrated Circuit, ASIC), or one or more integrated circuits configured to control execution of programs of the solutions of this application.

The display 1404 may be configured to display a related user interface, for example, an application interface, for example, may be configured to display a user interface related to a key application installed in the device.

It should be noted that FIG. 14 is merely an implementation of the device 1400 according to this embodiment of this application. During actual application, the device 1400 may further include more or fewer components. This is not limited herein.

Based on the foregoing embodiments and a same technical concept, an embodiment of this application further provides a control system. The control system includes the first controller and the device in the foregoing embodiments.

Optionally, the control system may further include the second controller in the foregoing embodiment.

Optionally, the control system may further include the third controller in the foregoing embodiment.

Based on the foregoing embodiments and a same technical concept, an embodiment of this application further provides a readable storage medium. The readable storage medium stores a program. When the program is run on a controller, the controller is caused to perform the method that is applied to any controller and that is provided in the foregoing embodiments.

Based on the foregoing embodiments and a same technical concept, an embodiment of this application further provides a readable storage medium. The readable storage medium stores a program. When the program is run on a device, the device is caused to perform the method that is applied to a device side and that is provided in the foregoing embodiments.

Based on the foregoing embodiments and a same technical concept, an embodiment of this application further provides a program product. The program product includes a program or instructions. When the program or the instructions are run on a controller, the controller is caused to perform the method that is applied to any controller and that is provided in the foregoing embodiments.

Based on the foregoing embodiments and a same technical concept, an embodiment of this application further provides a program product. The program product includes a program or instructions. When the program or the instructions are run on a device, the device is caused to perform the method that is applied to a device side and that is provided in the foregoing embodiments.

All or some of the methods in embodiments of this application may be implemented by using software, hardware, firmware, or any combination thereof. When software is used to implement embodiments, embodiments may be implemented completely or partially in a form of a program product. The program product includes one or more instructions. When the program instructions are loaded and executed, the procedure or functions according to embodiments of the present invention are all or partially generated.

It is clear that a person skilled in the art can make various modifications and variations to this application without departing from the scope ofthis application. This application is intended to cover these modifications and variations of this application provided that they fall within the scope of protection defined by the following claims and their equivalent technologies.

## Claims

1. A control method, applied to a first controller, wherein the method comprises:
in response to an unlocking request from a second controller, performing authentication on the second controller, wherein the unlocking request is used to request to unlock a door lock of a vehicle;
performing authentication on a device after the second controller is successfully authenticated, wherein the device is configured to serve as a digital key associated with the vehicle, and a distance between the device and the vehicle is less than or equal to a specified distance threshold; and
when the device is successfully authenticated, determining to unlock the door lock of the vehicle.

2. The method according to claim 1, wherein performing authentication on the device comprises:
sending a first random number to the device;
receiving a first authentication code from the device, wherein the first authentication code is generated by the device based on the first random number and a preset first key corresponding to the device; and
when the first authentication code is the same as a second authentication code, determining that the device is successfully authenticated, wherein the second authentication code is generated by the first controller based on the first random number and a preset second key corresponding to the first controller.

3. The method according to claim 2, wherein sending the first random number to the device comprises:
forwarding the first random number to the device via the second controller; and
receiving the first authentication code from the device comprises:
receiving the first authentication code that is from the device and that is forwarded by the second controller.

4. The method according to any one of claims 1 to 3, wherein the first controller is an unlocking controller deployed in the vehicle, and the second controller is a Bluetooth controller deployed in the vehicle.

5. The method according to any one of claims 1 to 4, wherein after determining to unlock the door lock of the vehicle, the method further comprises:
sending an unlocking indication to a third controller, wherein the third controller is configured to control the door lock of the vehicle, and the unlocking indication indicates to unlock the door lock of the vehicle.

6. A control method, applied to a device, wherein the method comprises:
when receiving a first random number from a first controller, generating a first authentication code based on the first random number and a preset first key corresponding to the device, wherein the device is configured to serve as a digital key associated with a vehicle, and the first controller is configured to determine whether to unlock a door lock of the vehicle; and
sending the first authentication code to the first controller, to cause the first controller to perform authentication on the device based on the first authentication code and determine, after the authentication succeeds, to unlock the door lock of the vehicle.

7. The method according to claim 6, wherein sending the first authentication code to the first controller comprises:
forwarding the first authentication code to the first controller via a second controller.

8. The method according to claim 7, wherein the second controller is a Bluetooth controller deployed in the vehicle.

9. The method according to any one of claims 6 to 8, wherein the first controller is an unlocking controller deployed in the vehicle.

10. A control method, applied to a first controller, wherein the method comprises:
determining, by performing authentication on a device, that the device is a digital key associated with a vehicle;
obtaining a distance between the device and the vehicle; and
when the distance is less than or equal to a specified distance threshold, determining to unlock a door lock of the vehicle.

11. The method according to claim 10, wherein determining, by performing authentication on the device, that the device is the digital key associated with the vehicle comprises:
performing authentication on the device based on an intelligent car connectivity industry ecosystem alliance ICCE standard or a car connectivity consortium CCC standard; and
when the device is successfully authenticated, determining that the device is the digital key associated with the vehicle.

12. The method according to claim 10 or 11, wherein obtaining the distance between the device and the vehicle comprises:
obtaining ranging reference information from a second controller, and calculating the distance between the device and the vehicle based on the ranging reference information, wherein the second controller is configured to collect the ranging reference information, and the ranging reference information is used to determine the distance between the device and the vehicle; or
obtaining the distance between the device and the vehicle from a second controller, wherein the second controller is configured to measure the distance between the device and the vehicle.

13. The method according to claim 12, wherein in a process of performing authentication on the device, information transmitted between the first controller and the device is forwarded via the second controller.

14. The method according to claim 12 or 13, wherein the second controller is a Bluetooth controller deployed in the vehicle.

15. The method according to any one of claims 10 to 14, wherein the first controller is an unlocking controller deployed in the vehicle.

16. The method according to any one of claims 10 to 15, wherein after determining to unlock the door lock of the vehicle, the method further comprises:
sending an unlocking indication to a third controller, wherein the third controller is configured to control the door lock of the vehicle, and the unlocking indication indicates to unlock the door lock of the vehicle.

17. A control method, applied to a device, wherein the device is configured to serve as a digital key associated with a vehicle, and the method comprises:
performing an authentication procedure with a first controller, to cause the first controller to perform authentication on the device and determine, after the authentication succeeds, to unlock a door lock of the vehicle, wherein the authentication procedure is used by the first controller to perform authentication on the device.

18. The method according to claim 17, wherein in a process of performing the authentication procedure with the first controller, information transmitted between the device and the first controller is forwarded via a second controller.

19. The method according to claim 17 or 18, wherein the second controller is a Bluetooth controller deployed in the vehicle.

20. The method according to any one of claims 17 to 19, wherein the first controller is an unlocking controller deployed in the vehicle.

21. A controller, wherein the controller comprises a memory and one or more processors, wherein
the memory is configured to store program code, and the program code comprises instructions; and when the instructions are executed by the one or more processors, the controller is caused to perform the method according to any one of claims 1 to 5, or perform the method according to any one of claims 10 to 16.

22. A device, wherein the device comprises a memory and one or more processors, wherein
the memory is configured to store program code, and the program code comprises instructions; and when the instructions are executed by the one or more processors, the device is caused to perform the method according to any one of claims 6 to 9 or the method according to any one of claims 17 to 20 via the display.

23. A control system, wherein the control system comprises the controller according to claim 21 and the device according to claim 22.

24. A readable storage medium, wherein the readable storage medium stores a program, and when the program is run on a controller, the controller is caused to perform the method according to any one of claims 1 to 5, or to perform the method according to any one of claims 10 to 16.

25. A readable storage medium, wherein the readable storage medium stores a program, and when the program is run on a device, the device is caused to perform the method according to any one of claims 6 to 9, or to perform the method according to any one of claims 17 to 20.

26. A program product, wherein the program product comprises a program or instructions, and when the program or the instructions are run on a controller, the controller is caused to perform the method according to any one of claims 1 to 5, or to perform the method according to any one of claims 10 to 16.

27. A program product, wherein the program product comprises a program or instructions, and when the program or the instructions are run on a device, the device is caused to perform the method according to any one of claims 1 to 5, or to perform the method according to any one of claims 10 to 16.
